**Europäisches Patentamt**

**European Patent Office**

**Office européen des brevets**

(19)

(11) **EP 1 566 748 A1**

(12) **EUROPEAN PATENT APPLICATION**

(43) Date of publication:
**24.08.2005 Bulletin 2005/34**

(51) Int Cl.⁷: **G06F 17/30**, G10L 17/00,
G11B 27/10

(21) Application number: **04258016.7**

(22) Date of filing: **21.12.2004**

| | |
|---|---|
| (84) Designated Contracting States:<br>**AT BE BG CH CY CZ DE DK EE ES FI FR GB GR**<br>**HU IE IS IT LI LT LU MC NL PL PT RO SE SI SK TR**<br>Designated Extension States:<br>**AL BA HR LV MK YU**<br><br>(30) Priority: **20.02.2004 KR 2004011320**<br><br>(71) Applicant: **SAMSUNG ELECTRONICS CO., LTD.**<br>**Gyeonggi-do (KR)**<br><br>(72) Inventors:<br> • **Kim, Sangkyun**<br>  **476 Sanggal-ri Giheung-eub, Yongin-si (KR)** | • **Kim, Jiyeun**<br>  **Songpa-gu Seoul (KR)**<br> • **Hwang, Doosun**<br>  **Eunpyeong-gu Seoul (KR)**<br> • **Moon, Youngsu**<br>  **Yangcheon-gu Seoul (KR)**<br> • **Huh, Youngsik**<br>  **Mapo-gu Seoul (KR)**<br><br>(74) Representative: **Ertl, Nicholas Justin**<br>  **Elkington and Fife LLP,**<br>  **Prospect House,**<br>  **8 Pembroke Road**<br>  **Sevenoaks,**<br>  **Kent TN13 1XR (GB)** |

(54) **Method and apparatus for detecting anchorperson shot**

(57)    A method and an apparatus for detecting an anchorperson shot are provided.

The method includes separating a moving image into audio signals and video signals; deciding boundaries between shots using the video signals; and extracting shots having a length larger than a first threshold value and a silent section having a length larger than a second threshold value from the audio signals using the boundaries and deciding the extracted shots as anchorperson speech shots.

FIG. 1

```
                 START
                   │
  ┌────────────────────────────────────┐
  │ SEPARTE MOVING IMAGE INTO AUDIO     │── 10
  │ SIGNALS AND VIDEO SIGNALS           │
  └────────────────────────────────────┘
                   │
  ┌────────────────────────────────────┐
  │ DECIDE BOUNDARIES BETWEEN           │── 12
  │ SHOTS USING VIDEO SIGNALS           │
  └────────────────────────────────────┘
                   │
  ┌────────────────────────────────────┐
  │ DOWN-SAMPLE AUDIO SIGNALS           │── 14
  └────────────────────────────────────┘
                   │
  ┌────────────────────────────────────┐
  │ DECIDE ANCHORPERSON SPEECH SHOTS    │── 16
  └────────────────────────────────────┘
                   │
  ┌────────────────────────────────────┐
  │ SEPARATE ANCHORPERSON'S SPEECH SHOTS│── 18
  │ FROM ANCHORPERSON SPECCH SHOTS      │
  └────────────────────────────────────┘
                   │
  ┌────────────────────────────────────┐
  │ DECIDE SIMILAR GROUPS               │── 20
  └────────────────────────────────────┘
                   │
  ┌────────────────────────────────────┐
  │ OBTAIN REPRESENTATIVE VALUE OF      │── 22
  │ EACH OF SIMILAR GROUPS              │
  └────────────────────────────────────┘
                   │
  ┌────────────────────────────────────┐
  │ GENERATE SEPARATE SPEECH MODEL      │── 24
  └────────────────────────────────────┘
                   │
                  END
```

EP 1 566 748 A1

**Description**

BACKGROUND OF THE INVENTION

The present invention relates to moving image processing, and more particularly, to a method and an apparatus for detecting an anchorperson shot of the moving image.

In a conventional method of detecting an anchorperson shot in a broadcasting signal used in a field such as news or in a moving image like a movie, the anchorperson shot is detected using a template on the anchorperson shot. In the method, format information about the anchorperson shot is assumed and recognized in advance and the anchorperson shot is extracted using the recognized format information or using the template generated using the color of an anchorperson's face or clothes. However, in the method, since a predetermined template of the anchorperson is used, a performance of detecting an anchorperson shot may be greatly degraded by a change in the format of the anchorperson shot. Furthermore, in a conventional method of detecting the anchorperson shot using the color of the anchorperson's face or clothes, when the color of the anchorperson's face or clothes is similar to that of a background or illumination is changed, the performance of detecting an anchorperson shot is degraded. In addition, in a conventional method of obtaining anchorperson shot information using a first anchorperson shot, detecting an anchorperson shot is affected by the degree at which the number of anchorpersons or the format of the anchorperson shot is changed. That is, when the first anchorperson shot is wrongly detected, the performance of detecting an anchorperson shot is degraded.

Meanwhile, in another conventional method of detecting an anchorperson shot, the anchorperson shot is detected by clustering characteristics such as a similar color distribution in the anchorperson shot or time when the anchorperson shot is generated. In the method, a report shot having a color distribution similar to that of the anchorperson shot may be wrongly detected as the anchorperson shot and one anchorperson shot that occurs unexpectedly cannot be detected.

SUMMARY OF THE INVENTION

According to an aspect of the present invention, there is provided a method of detecting an anchorperson shot, the method comprising separating a moving image into audio signals and video signals; deciding boundaries between shots using the video signals; and extracting shots having a length larger than a first threshold value and a silent section having a length larger than a second threshold value from the audio signals using the boundaries and deciding the extracted shots as anchorperson speech shots.

The invention thus provides a method of detecting an anchorperson shot using audio signals separated from a moving image, that is, using anchorperson's speech information.

According to another aspect of the present invention, there is provided an apparatus for detecting an anchorperson shot, the apparatus comprising a signal separating unit separating a moving image into audio signals and video signals; a boundary deciding unit deciding boundaries between shots using the video signals; and an anchorperson speech shot extracting unit extracting shots having a length larger than a first threshold value and a silent section having a length larger than a second threshold value from the audio signals using the boundaries and outputting the extracted shots as anchorperson speech shots.

The invention thus also provides an apparatus for detecting an anchorperson shot using audio signals separated from a moving image, that is, using anchorperson's speech information.

BRIEF DESCRIPTION OF THE DRAWINGS

The above and other features and advantages of the present invention will become more apparent by describing in detail exemplary embodiments thereof with reference to the attached drawings in which:

FIG. 1 is a flowchart illustrating a method of detecting an anchorperson shot according to an embodiment of the present invention;
FIGS. 2A and 2B are waveform diagrams for explaining operation 14 of FIG. 1;
FIG. 3 is a flowchart illustrating operation 16 of FIG. 1 according to an embodiment of the present invention;
FIG. 4 is a flowchart illustrating operation 34 of FIG. 3 according to an embodiment of the present invention;
FIG. 5 shows a structure of a shot among the shots selected in operation. 32;
FIG. 6 is a flowchart illustrating operation 52 of FIG. 4 according to an embodiment of the present invention;
FIG. 7 is a graph showing the number of frames versus energy;
FIG. 8 illustrates the distribution of frames with respect to energies for understanding operation 54 of FIG. 4;
FIG. 9 shows a structure of a shot among shots selected in operation 32 for understanding operation 56 of FIG. 4;

FIGS. 10A, 10B, 10C, 10D, and 10E show anchorperson speech shots decided in operation 16 of FIG. 1;

FIG. 11 is a flowchart illustrating operation 18 of FIG. 1 according to an embodiment of the present invention;

FIG. 12 is a flowchart illustrating operation 130 of FIG. 11 according to an embodiment of the present invention;

FIG. 13 is a flowchart illustrating operation 130 of FIG. 11 according to an embodiment of the present invention;

FIG. 14 is a flowchart illustrating operation 172 of FIG. 13 according to an embodiment of the present invention;

FIG. 15 is a flowchart illustrating operation 132 of FIG. 11 according to an embodiment of the present invention;

FIGS. 16A through 16E are views for understating operation 132 of FIG. 11;

FIG. 17 is a flowchart illustrating operation 132 of FIG. 11 according to another embodiment of the present invention;

FIG. 18 is a flowchart illustrating operation 20 of FIG. 1 according to an embodiment of the present invention;

FIGS. 19A, 19B, and 19C show similar groups decided by grouping the anchorperson speech shots of FIGS. 10A through 10E;

FIG. 20 is a flowchart illustrating a method of detecting an anchorperson shot according to another embodiment of the present invention;

FIG. 21 is a flowchart illustrating operation 274 of FIG. 20 according to an embodiment of the present invention;

FIG. 22 is a block diagram of an apparatus for detecting an anchorperson shot according to an embodiment of the present invention; and

FIG. 23 is a block diagram of an apparatus for detecting an anchorperson shot according to another embodiment of the present invention.

## DETAILED DESCRIPTION OF THE INVENTION

Hereinafter, a method of detecting an anchorperson shot according to the present invention will be described in detail with reference to the attached drawings.

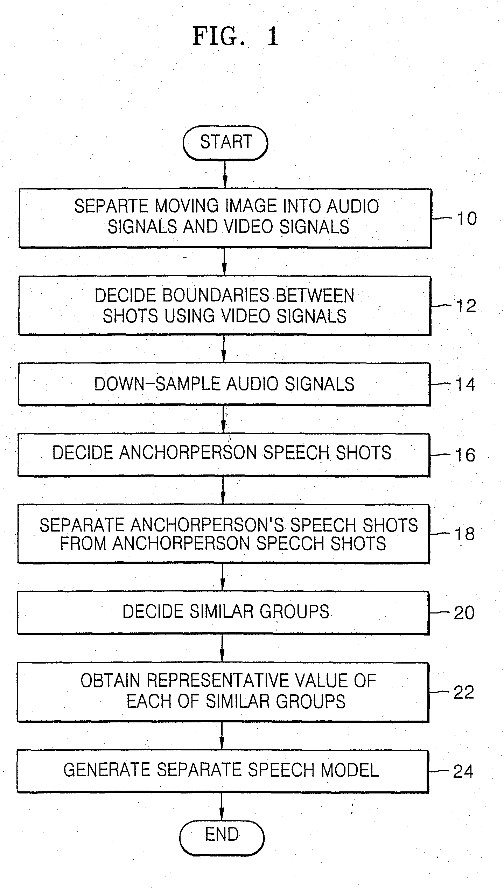

FIG. 1 is a flowchart illustrating a method of detecting an anchorperson shot according to an embodiment of the present invention. The method of detecting the anchorperson shot of FIG. 1 includes obtaining anchorperson speech shots in a moving image (operations 10 through 16) and obtaining an anchorperson speech model in the anchorperson speech shots (operations 18 through 24).

In operation 10, the moving image is separated into audio signals and video signals. Hereinafter, it is assumed that the moving image includes audio signals as well as video signals. In this case, the moving image may be data compressed by the MPEG standard. If the moving image is compressed by MPEG-1, the frequency of the audio signals separated from the moving image may be 48 kHz or 44.1 kHz, for example, which corresponds to the sound quality of a compact disc (CD). In order to perform operation 10, a raw pulse code modulation (PCM) format may be extracted from the moving image and the extracted raw PCM format may be decided as the separated audio signals. After operation 10, in operation 12, boundaries between shots are decided using the video signals. To this end, a portion in which there is relatively a large change in a moving image being sensed, the sensed portion is decided as the boundary between the shots. Changes in at least one of brightness, color quantity, and motion of a moving image may be sensed, and a portion in which there is a rapid change in the sensed results may be decided as the boundary between the shots.

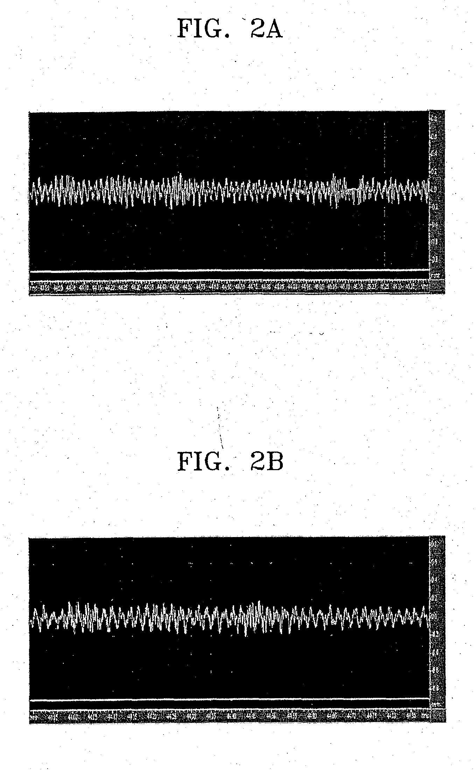

FIGS. 2A and 2B are waveform diagrams for explaining operation 14 of FIG. 1. FIG. 2A is a waveform diagram of a separated audio signal, and FIG. 2B is a waveform diagram of a down-sampled audio signal.

After operation 12, in operation 14, audio signals are down-sampled. The size of the separated audio signal is too large, and the entire audio signal does not need to be analyzed. Thus, the separated audio signals are down-sampled at a down-sampling frequency such as 8 kHz, 12 kHz, or 16 kHz, for example. In this case, the down-sampled results may be stored as a wave format. Here, unlike in FIG. 1, operation 14 may be performed before or simultaneously with operation 12.

If the moving image is compressed by the MPEG-1 standard, the frequency of the separated audio signal is 48 kHz and the separated audio signal is down-sampled at the frequency of 8 kHz, the audio signal shown in FIG. 2A may be down-sampled, as shown in FIG. 2B.

After operation 14, in operation 16, shots having a length larger than a first threshold value TH1 and a silent section having a length larger than a second threshold value TH2 are extracted from the down-sampled audio signals using the boundaries obtained in operation 12 and the extracted shots are decided as anchorperson speech shots. The anchorperson speech shot means a shot containing an anchorperson's speech, but is not limited to this and may be a shot containing a reporter's speech or the sound of an object significant to a user. In general, the length of the anchorperson shot is considerably long, more than 10 seconds, and there are some silent sections in a portion in which the anchorperson shot ends, which is a boundary between the anchorperson shot and the report shot when the anchorperson shot and the report shot exist continuously.

In operation 16, the anchorperson speech shot is decided based on its characteristics. That is, the length of the shot should be larger than the first threshold value TH1 and a silent section having a length larger than the second threshold value TH2 should exist in a portion in which the shot ends, which is a boundary between the shots, so that a shot may be an anchorperson speech shot.

The method of detecting the anchorperson shot of FIG. 1 may not include operation 14. In this case, after operation 12, in operation 16, shots having a length larger than the first threshold value TH1 and a silent section having a length larger than the second threshold value TH2 are extracted from the audio signals using the boundaries obtained in operation 12, and the extracted shots are decided as anchorperson speech shots.

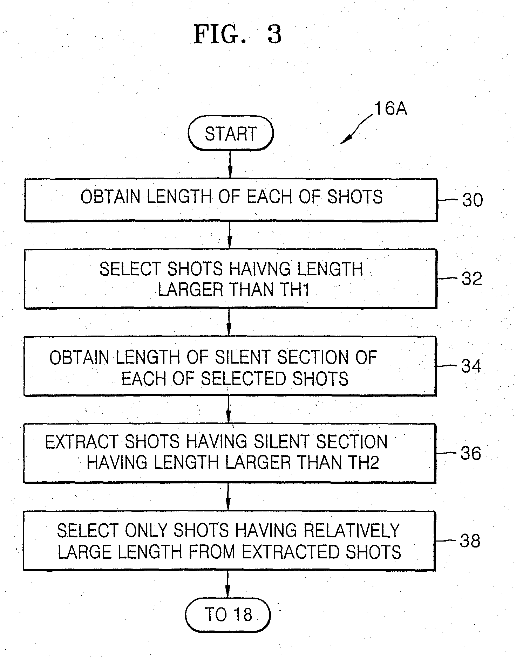

FIG. 3 is a flowchart illustrating operation 16 of FIG. 1 according to an embodiment 16A of the present invention. The embodiment 16A of FIG. 3 includes deciding anchorperson speech shots using the length of shots and the length of a silent section (operations 30 through 38).

First, in operation 30, the length of each of shots is obtained using the boundaries obtained in operation 12. The boundary between the shots represents a portion between the end of a shot and the beginning of a new shot, and thus the boundaries may be used in obtaining the length of the shots.

After operation 30, in operation 32, shots having the length larger than the first threshold value TH1 are selected from the shots.

After operation 32, in operation 34, the length of a silent section of each of the selected shots is obtained. The silent section is a section in which there is no significant sound.

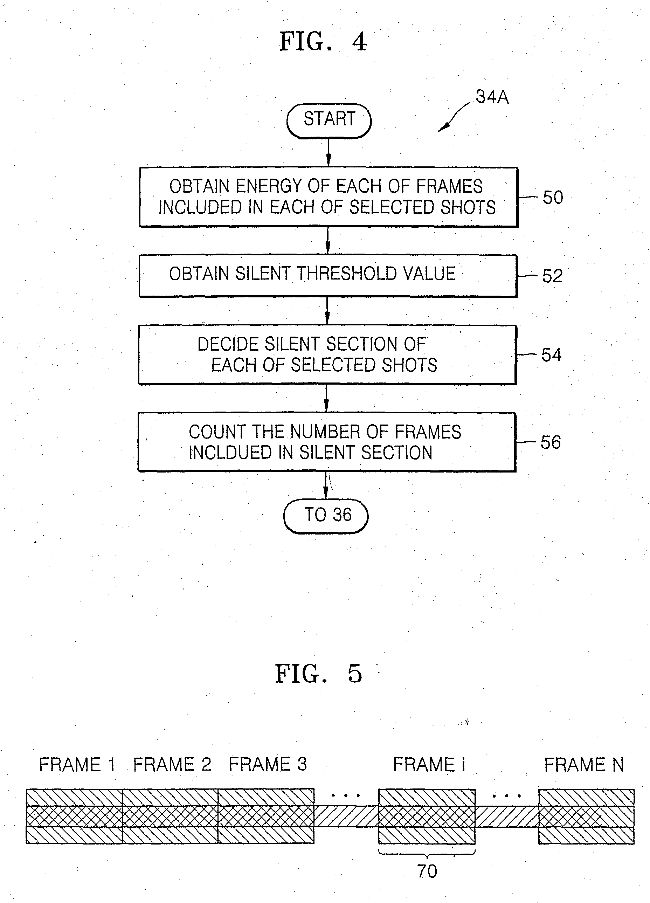

FIG. 4 is a flowchart illustrating operation 34 of FIG. 3 according to an embodiment 34A of the present invention. The embodiment 34A of FIG. 4 includes obtaining a silent threshold value using audio energies of frames (operations 50 and 52) and counting the number of frames included in a silent section obtained using the silent threshold value (operations 54 and 56).

FIG. 5 shows an exemplary structure of a shot among the shots selected in operation 32. The shot of FIG. 5 is comprised of N frames, that is, Frame 1, Frame 2, Frame 3, ... , Frame i, ... , and Frame N. It is assumed that N is a positive integer equal to or greater than 1, $1 \leq i \leq N$, Frame 1 is a starting frame and Frame N is an end frame, for convenience.

First, in operation 50, an energy of each of frames Frame 1, Frame 2, Frame 3, ... , Frame i, ... , and Frame N included in each of the shots selected in operation 32 is obtained. Here, the energy of each of the frames included in each of the shots selected in operation 32 may be given by Equation 1.

$$E_i = \frac{\sqrt{\sum_{n=1}^{f_d t_f} pcm_n^2}}{f_d t_f} \qquad (1)$$

Here, $E_i$ is an energy of an i-th frame among frames included in a shot, $f_d$ is a down frequency at which the audio signals are down-sampled, $t_f$ is the length 70 of the i-th frame, and pcm is a pulse code modulation (PCM) value of each sample included in the i-th frame and is an integer. When $f_d$ is 8 kHz and $t_f$ is 25 ms, $f_d t_f$ is 200. That is, there are 200 samples in the i-th frame.

After operation 50, in operation 52, a silent threshold value is obtained using energies of frames included in the shots selected in operation 32. The size of energies of the frames included in the silent section in the moving image like news may be different from one another in each of broadcasting stations. Thus, the silent threshold value is obtained using the energy obtained in operation 50.

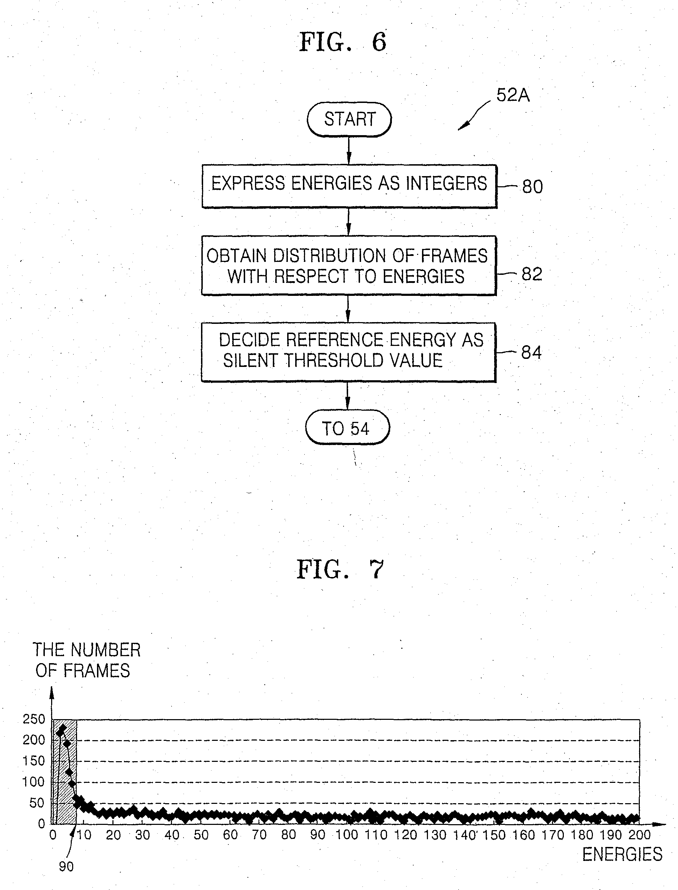

FIG. 6 is a flowchart illustrating operation 52 of FIG. 4 according to an embodiment 52A of the present invention. The embodiment 52A of FIG. 4 includes obtaining the distribution of frames with respect to energies using an energy expressed as an integer (operations 80 and 82) and deciding a corresponding energy as a silent threshold value (operation 84).

FIG. 7 is a graph showing the number of frames versus energy. A latitudinal axis is an energy, and a longitudinal axis is the number of frames.

In operation 80, each of the energies obtained in operation 50 in the frames included in each of the shots selected in operation 32 is rounded and expressed as an integer. After operation 80, in operation 82, the distribution of frames with respect to energies is obtained using the energies expressed as the integers. For example, an energy of each of the frames included in each of the shots selected in operation 32 is shown as the distribution of frames with respect to energies, as shown in FIG. 7.

After operation 82, in operation 84, a reference energy is decided as a silent threshold value in the distribution of the frames with respect to energies, and operation 54 is performed. The reference energy is selected so that the number of frames distributed in the energies equal to or less than the reference energy is approximate to the number corresponding to a predetermined percentage Y% of the total number X of frames included in the shots selected in operation 32, that is, XY/100. For example, when the distribution of frames with respect to energies is shown in FIG. 7 and X=4500 and Y=20, an energy 90 having an initial value of about '8' that contains about 900 frames may be selected as the reference energy.

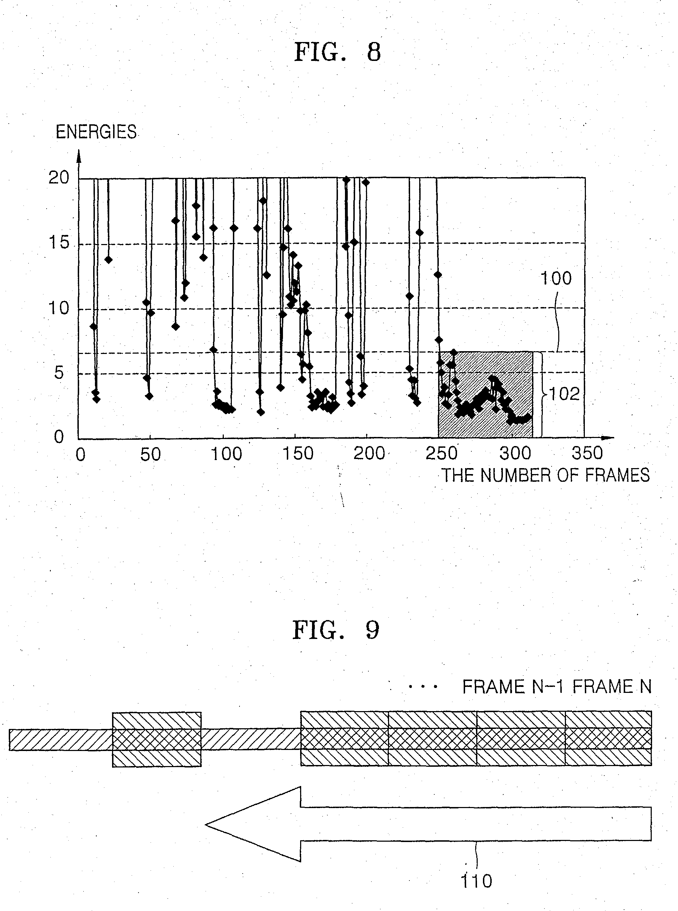

FIG. 8 illustrates the distribution of frames with respect to energies for understanding operation 54 of FIG. 4, which shows the distribution of energies in a latter part of one anchorperson speech shot. Here, a latitudinal axis represents the number of frames (the flow of time), and a longitudinal axis represents energies.

After operation 52, in operation 54, a silent section of each of the shots selected in operation 32 is decided using a silent threshold value. For example, as shown in FIG. 8, a section to which the frames having an energy equal to or less than the silent threshold value 100 belong, is decided as the silent section 102.

FIG. 9 shows an exemplary structure of a shot among shots selected in operation 32 for understanding operation 56 of FIG. 4. The shot of FIG. 9 is comprised of N frames, that is, Frame N, Frame N-1, ... , and Frame 1.

After operation 54, in operation 56, the number of silent frames is counted in each of the shots selected in operation 32, the counted results are decided as the length of a silent section, and an operation 36 is performed. The silent frame is a frame included in the silent section and having an energy equal to or less than a silent threshold value. For example, as shown in FIG. 9, counting may be performed in a direction 110 of a starting frame Frame 1 from an end frame Frame N of each of the shots selected in operation 32.

The end frame of each of the shots selected in operation 32 may not be counted, because the end frame of each of the selected shots has the number of samples not larger than $f_d t_f$.

In addition, when the number of frames that belong to the silent section is counted, that is, when it is determined whether a frame belongs to the silent section, if frames having an energy larger than the silent threshold value exist continuously, a counting operation may be stopped. For example, when it is checked from each of the shots selected in operation 32 whether the frames are silent frames, even though an L-th frame is not the silent frame and when a (L-1)-th frame is the silent frame, the L-th frame is regarded as the silent frame. In addition, when both a (L-M)-th frame and a (L-M-1)-th frame are not the silent frames, the counting operation is stopped.

After operation 34, in operation 36, shots having a silent section having a length larger than the second threshold value TH2 are extracted from the shots selected in operation 32. For example, when the length $t_f$ of a frame is 25 ms and the second threshold value TH2 is set to 0.85 second, if the number of silent frames included in the silent section of a shot is larger than 34, the shot is extracted in operation 36.

After operation 36, in operation 38, only shots (PQ/100) of a predetermined percentage Q% having a relatively large length are selected from P (where P is a positive integer) extracted shots and are decided as anchorperson speech shots, and operation 18 is performed. For example, when P is 200 and Q is 80, 40 shots having a small length among 200 shots extracted in operation 36 are discarded, and only 160 shots having a large length are selected and decided as anchorperson speech shots.

Operation 16A of FIG. 3 includes operation 38 so that a report shot having a long silent section is prevented from being extracted as an anchorperson speech shot. However, operation 16A may not include operation 38. In this case, after operation 36 is performed, operation 18 is performed.

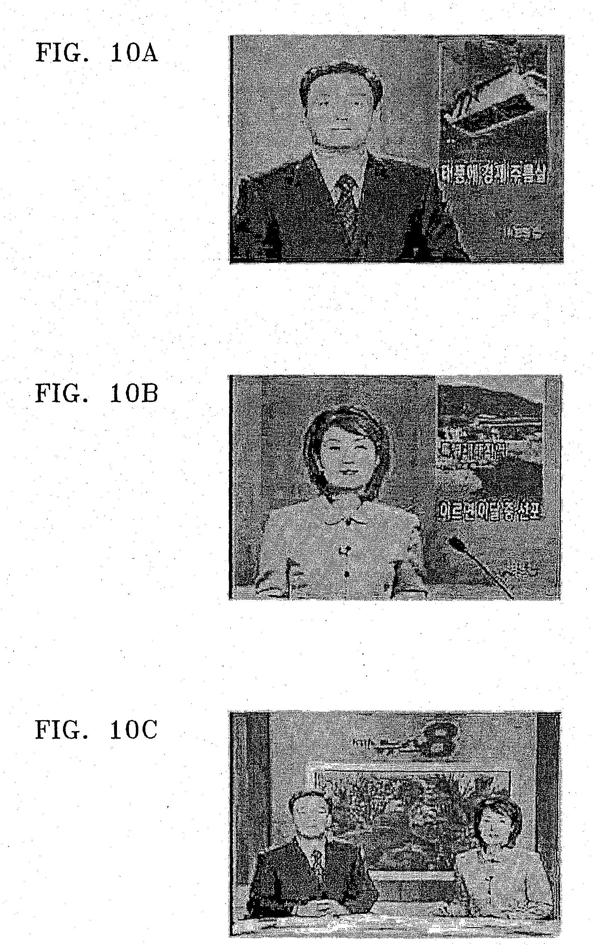

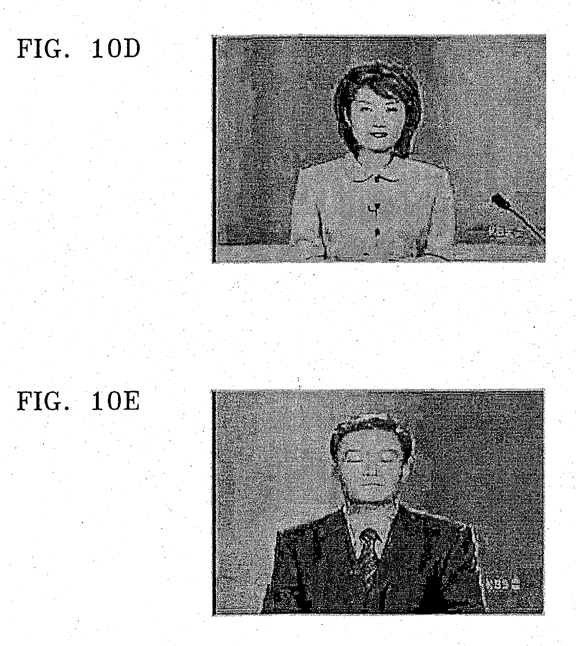

FIGS. 10A, 10B, 10C, 10D, and 10E show exemplary anchorperson speech shots decided in operation 16 of FIG. 1.

Only anchorperson speech shots shown in FIGS. 10A through 10E, for example, may be extracted from the moving image by performing operations 10 through 16 of FIG. 1.

Meanwhile, after operation 16, in operation 18, anchorpersons' speech shots that contain anchorpersons' speeches are separated from the anchorperson speech shots. The anchorpersons may be the same gender or the opposite gender anchorpersons. That is, the anchorpersons' speech shots may contain only anchormen speech or anchorwomen speech, or both anchormen and anchorwomen speech.

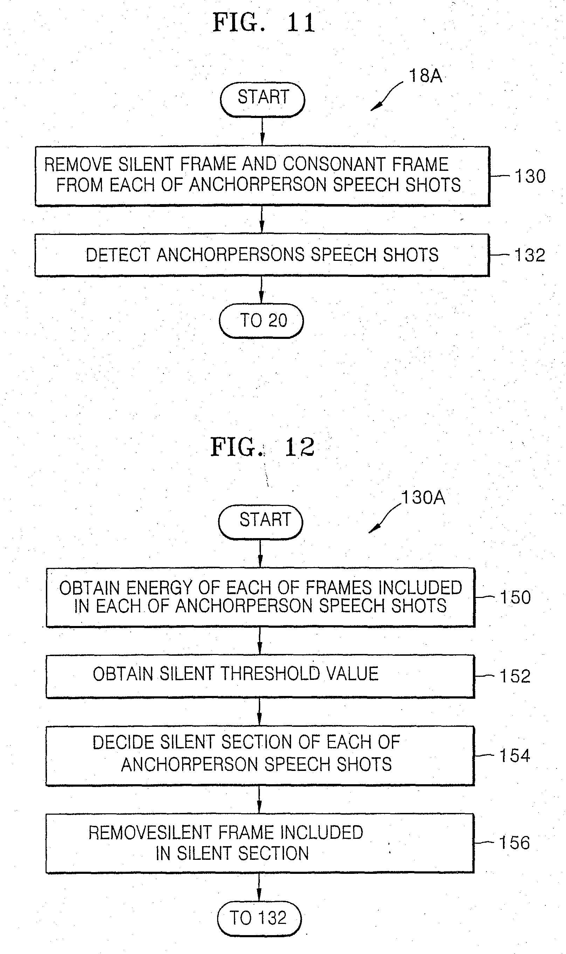

FIG. 11 is a flowchart illustrating operation 18 of FIG. 1 according to an embodiment 18A of the present invention. The embodiment 18A of FIG. 11 includes removing a silent frame and a consonant frame from each of anchorperson speech shots and then detecting anchorpersons' speech shots (operations 130 and 132).

After operation 16, in operation 130, the silent frame and the consonant frame are removed from each of the anchorperson speech shots.

FIG. 12 is a flowchart illustrating operation 130 of FIG. 11 according to an embodiment 130A of the present invention. The embodiment 130A of FIG. 12 includes removing frames that belong to a silent section decided by a silent threshold value obtained using energies of the frames (operations 150 through 156).

In operation 150, in order to remove the silent frame from each of anchorperson speech shots, an energy of each of the frames included in each of anchorperson speech shots is obtained.

After operation 150, in operation 152, the silent threshold value is obtained using energies of the frames included in each of the anchorperson speech shots. After operation 152, in operation 154, the silent section of each of the anchorperson speech shots is decided using the silent threshold value. After operation 154, in operation 156, the silent frame included in the decided silent section is removed from each of the anchorperson speech shots.

Operations 150, 152, and 154 of FIG. 12 are performed on each of the anchorperson speech shots decided in operation 16, and operations 50, 52, and 54 of FIG. 4 are performed on each of the shots selected in operation 32. Except for this point, operations 150, 152, and 154 of FIG. 12 correspond to operations 50, 52, and 54 of FIG. 4. Thus, by substituting performing on the shots selected in operation 32 for performing on the anchorperson speech shots decided in operation 16, the descriptions of FIGS. 6 through 8 may be applied to operations 150, 152, and 154 of FIG. 12.

Alternatively, without the need of separately obtaining the silent frame of the anchorperson speech shots decided in operation 16 in operations 150 through 154 of FIG. 12, only the silent section of the anchorperson speech shots decided in operation 16 among silent sections that have been already decided in operations 50 through 54 is used. Thus, in operation 156, the frames included in the silent section that has been already decided in operation 54 are regarded as the silent frame and are removed from each of the anchorperson speech shots.

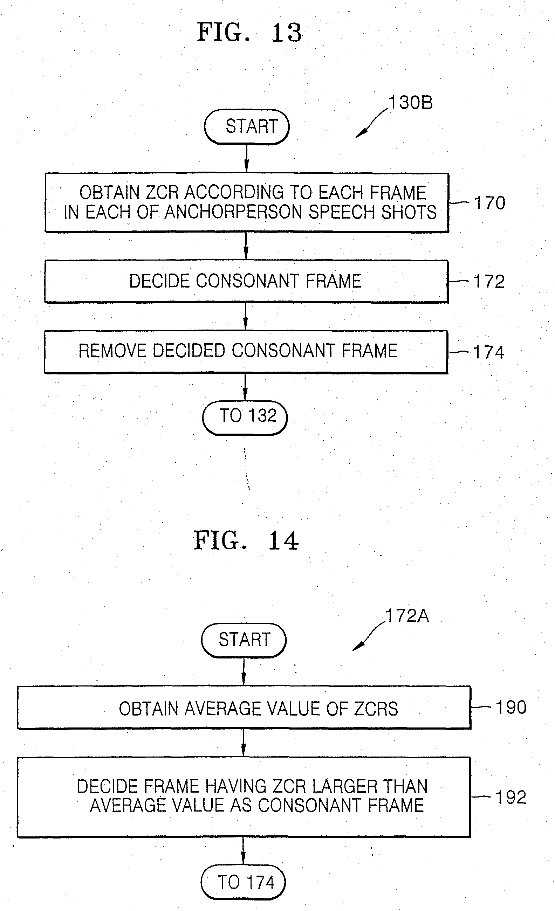

FIG. 13 is a flowchart illustrating operation 130 of FIG. 11 according to an embodiment 130B of the present invention. The embodiment 130B includes deciding a consonant frame using a zero crossing rate (ZCR) obtained according to each frame in each of anchorperson speech shots (operations 170 and 172) and removing the decided consonant frame (operation 174).

First, in operation 170, the ZCR according to each frame included in each of the anchorperson speech shots is obtained. The ZCR may be given by Equation 2.

$$ZCR = \frac{\#}{f_d t_f} \qquad (2)$$

Here, # is the number of sign changes in decibel values of pulse code modulation (PCM) data, and $t_f$ is the length of a frame in which the ZCR is obtained. In this case, the ZCR increases as the frequency of an audio signal increases. In addition, the ZCR is used in classifying a consonant part and a vowel part of anchorperson's speech, because the fundamental frequency of speech mainly exists in the vowel part of speech.

After operation 170, in operation 172, the consonant frame is decided using the ZCR of each of the frames included in each of the anchorperson speech shots.

FIG. 14 is a flowchart illustrating operation 172 of FIG. 13 according to an embodiment 172A of the present invention. The embodiment 172A of FIG. 14 includes deciding a consonant frame using an average value of ZCRs (operations 190 and 192).

After operation 170, in operation 190, the average value of ZCRs of frames included in each of anchorperson speech shots is obtained. After operation 190, in operation 192, in each of the anchorperson speech shots, a frame having a ZCR larger than a predetermined multiple of the average value of the ZCRs is decided as the consonant frame, and operation 174 is performed. The predetermined multiple may be set to '2'.

After operation 172, in operation 174, the decided consonant frame is removed from each of the anchorperson speech shots.

Operation 130A of FIG. 12 and operation 130B of FIG. 13 may be performed at the same time. In this case, as shown in FIGS. 12 and 13, after operation 156 of FIG. 12, operation 132 is performed, and after operation 174 of FIG. 13, operation 132 is performed.

Alternatively, after operation 130A of FIG. 12, operation 130B of FIG. 13 may be performed. In this case, unlike in FIG. 12, after operation 156 of FIG. 12, operation 170 is performed.

Alternatively, before operation 130A of FIG. 12, operation 130B of FIG. 13 may be performed. In this case, unlike in FIG. 13, after operation 174 of FIG. 13, operation 150 is performed.

Meanwhile, according to an embodiment of the present invention, after operation 130, in operation 132, mel-frequency cepstral coefficients (MFCCs) according to each coefficient of each of the frames included in each of the anchorperson speech shots from which the silent frame and the consonant frame are removed are obtained, and anchorpersons' speech shots are detected using the MFCCs. The MFCCs have been introduced by Davis S.B. and Mermelstein P. ["Comparison of Parametric Representations of Monosyllabic Word Recognition in Continuously Spoken Sentences", IEEE Trans. Acoustics, Speech and Signal Processing, 28, pp. 357-366, 1980].

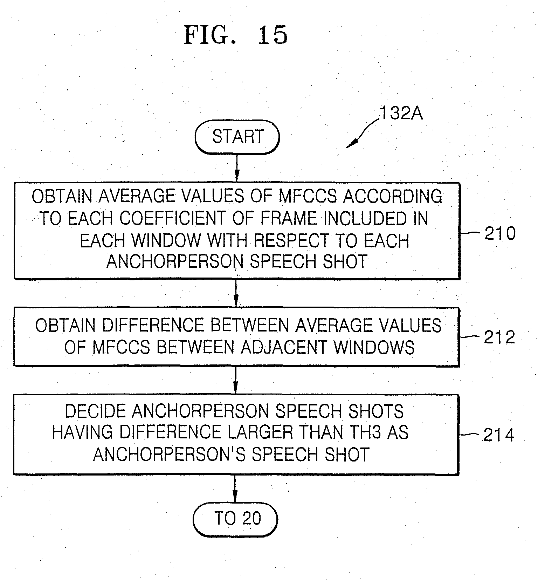

FIG. 15 is a flowchart illustrating operation 132 of FIG. 11 according to an embodiment 132A of the present invention. The embodiment 132A of FIG. 15 includes deciding anchorpersons' speech shots using MFCCs in each of anchorperson speech shots (operations 210 through 214).

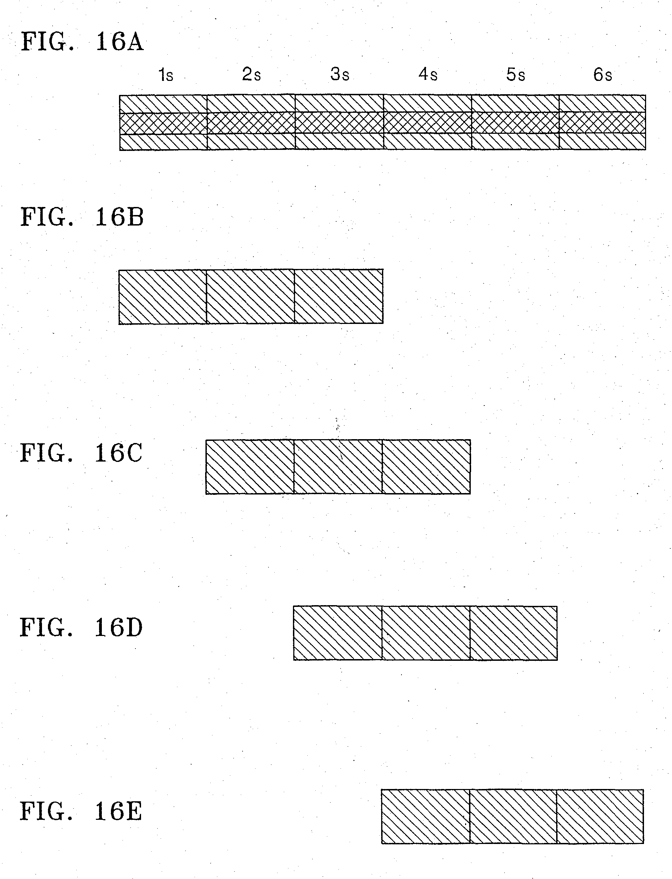

FIGS. 16A through 16E are views for understating operation 132 of FIG. 11. FIG. 16A shows an anchorperson speech shot, and FIGS. 16B through 16E show exemplary windows.

In operation 210, with respect to each of anchorperson speech shots from which a silent frame and a consonant frame are removed, average values of MFCCs according to each coefficient of a frame included in each window are obtained while a window having a predetermined length moves at predetermined time intervals. The MFCCs are feature values widely used in speech recognition and generally include 13 coefficients in each frame. In the present invention, 12 MFCCs, the zeroth coefficient is excluded, are used for speech recognition.

In this case, each window may include a plurality of frames, and each frame has a MFCC according to each coefficient of a frame. Thus, average values of MFCCs according to each coefficient of each window are obtained by averaging MFCCs according to each coefficient of a plurality of frames of each window.

After operation 210, in operation 212, a difference between the average values of MFCCs is obtained between adjacent windows. After operation 212, in operation 214, with respect to each of the anchorperson speech shots from which the silent frame and the consonant frame are removed, if the difference between the average values of MFCCs between the adjacent windows is larger than a third threshold value TH3, the anchorperson speech shots are decided as anchorpersons' speech shots.

For example, referring to FIG. 16, when a predetermined length of a window is 3 seconds and predetermined time intervals at which the window moves are 1 second, as shown in FIGS. 16B through 16E, in operation 210, the average value of MFCCs according to each coefficient of frames included in each window is obtained while the window moves at time intervals of 1 second. In this case, the average value of MFCCs obtained in each window may be obtained with respect to each of seventh, eighth, ninth, tenth, eleventh, and twelfth coefficients. In this case, in operation 212, the difference between the average values of MFFCs may be obtained between adjacent windows of FIGS. 16B and 16C, between adjacent windows of FIGS. 16C and 16D, and between adjacent windows of FIGS. 16D and 16E. If at least one of the differences obtained in operation 212 is larger than the third threshold value TH3, in operation 214, the anchorperson speech shots of FIG. 16A are decided as the anchorpersons' speech shots.

According to another embodiment of the present invention, after operation 130, in operation 132, a MFCC according to each coefficient and power spectral densities PSDs in a predetermined frequency bandwidth are obtained in each of the frames included in each of the anchorperson speech shots from which the silent frame and the consonant frame are removed, and the anchorpersons' speech shots are detected using the MFCCs according to each coefficient and the PSDs. The predetermined frequency bandwidth is a frequency bandwidth in which there is a large difference between average spectrums of men speech and women speech and may be set to 100 - 150 Hz, for example. The difference between spectrums of men speech and women speech is introduced by Irii, H. , Itoh, K. , and Kitawaki, N. ["Multi-lingual Speech Database for Speech Quality Measurements and its Statistic Characteristics", Trans. Committee on Speech Research, Acoust. Soc. Jap, pp. S87-69, 1987] and by Saito, S, Kato, K. , and Teranishi, N. ["Statistical Properties of Fundamental Frequencies of Japanese Speech Voices", J. Acoust. Soc. Jap., 14, 2, pp. 111-116, 1958].

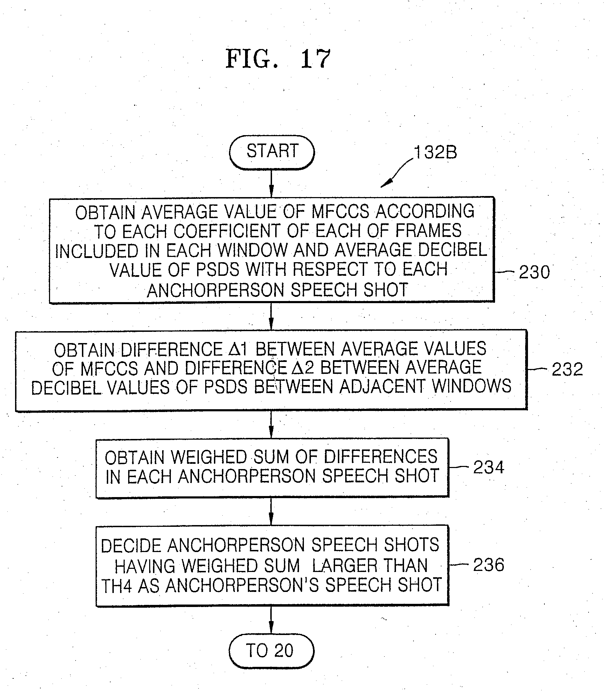

FIG. 17 is a flowchart illustrating operation, 132 of FIG. 11 according to an embodiment 132B of the present invention. The embodiment 132B of FIG. 17 includes deciding anchorpersons' speech shots using MFCCS and PSDs in a predetermined frequency bandwidth in each anchorperson speech shot (operations 230 through 236).

In operation 230, an average value of MFCCs according to each coefficient of each of frames included in each window and an average decibel value of PSDs in the predetermined frequency bandwidth are obtained in each of anchorperson speech shots from which a silent frame and a consonant frame are removed, while a window having a predetermined length moves at predetermined time intervals. The average decibel value of PSDs in the predetermined frequency bandwidth of each window is obtained by calculating a spectrum in a predetermined frequency bandwidth of each of frames included in each window, averaging the calculated spectrum, and converting the calculated average spectrum into a decibel value.

For example, as shown in FIGS. 16B through 16E, the average decibel value of PSDs in the predetermined frequency bandwidth included in each window as well as the average value of MFCCs according to each coefficient of each of frames included in each window are obtained while the window having a length of 3 seconds moves at time intervals of 1 second. Each of three frames of each window has a decibel value of PSDs in the predetermined frequency bandwidth. Thus, the average decibel value of PSDs in the predetermined frequency bandwidth of each window is obtained by averaging decibel values of PSDs of the three frames of each window.

After operation 230, in operation 232, a difference $\Delta 1$ between average values of MFCCs between adjacent windows WD1 and WD2 and a difference $\Delta 2$ between average decibel values of PSDs between the adjacent windows WD1 and WD2 are obtained.

After operation 232, in operation 234, a weighed sum of the differences $\Delta 1$ and $\Delta 2$ is obtained in each of the anchorperson speech shots from which the silent frame and the consonant frame are removed. The weighed sum WS1 may be given by Equation 3.

$$WS1 = W_1\Delta1 + (1-W_1)\Delta2 \qquad (3)$$

Here, WS1 is a weighed sum, and $W_1$ is a first weighed value.

After operation 234, in operation 236, the anchorperson speech shot having the weighed sum WS1 larger than a fourth threshold value TH4 is decided as anchorpersons' speech shot, and operation 20 is performed.

In operation 132A of FIG. 15, only the average value of MFCCs is used, and the average decibel value of PSDs has not been used. Thus, operation 132A of FIG. 15 may be performed to decide anchorpersons speech shots containing comments of anchorpersons of the same gender having different voices from anchorperson speech shots. In this case, in operation 132B of FIG. 17, the average decibel value of PSDs as well as the average value of MFCCs are used. In this way, using the average decibel value of PSDs, operation 132B of FIG. 17 may be performed to decide anchorpersons' speech shots containing comments of both anchormen and anchorwomen from the anchorperson speech shots.

Meanwhile, after operation 18, in operation 20, the anchorpersons' speech shots are clustered, anchorperson' speech shots excluding the anchorpersons' speech shots from the anchorperson speech shots are grouped, and the grouped results are decided as similar groups.

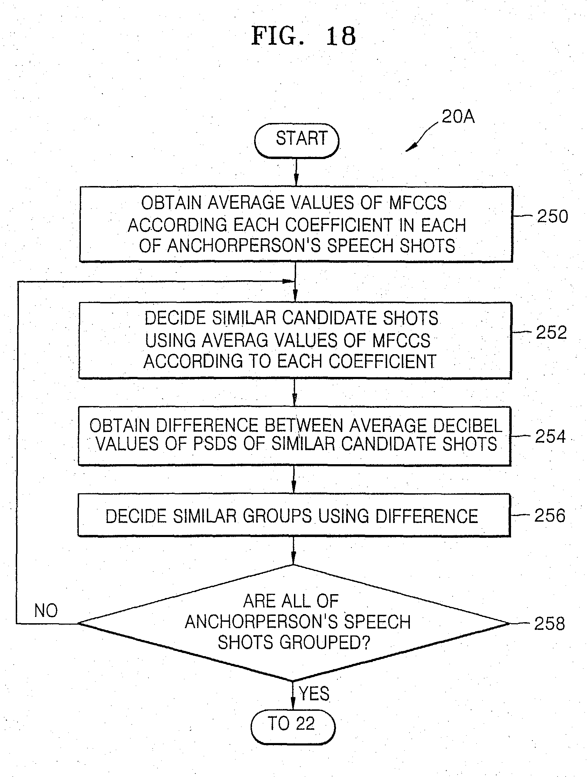

FIG. 18 is a flowchart illustrating operation 20 of FIG. 1 according to an embodiment 20A of the present invention. The embodiment 20A of FIG. 18 includes deciding similar groups using MFCCs and PSDs (operations 250 through 258).

In operation 250, an average value of MFCCs according to each coefficient is obtained in each of anchorperson's speech shots.

After operation 250, in operation 252, when a MFCC distance calculated using average values of MFCCs according to each coefficient of two anchorperson's speech shots $S_j$ and $S_{j+1}$ is the closest among the anchorperson speech shots and smaller than a fifth threshold value TH5, the two anchorperson's speech shots $S_j$ and $S_{j+1}$ are decided as similar candidate shots $S_j'$ and $S_{j+1}'$. Coefficients of the averages values of MFCCs according to each coefficient used in operation 252 may be third to twelfth coefficients, and j represents an index of an anchorperson's shot and is initialized in operation 250. In this case, the MFCC distance WMFCC may be given by Equation 4.

$$WMFCC = \sqrt{(a_1 - b_1)^2 + (a_2 - b_2)^2 + ... + (a_k - b_k)^2} \qquad (4)$$

Here, $a_1$, $a_2$, ... , and $a_k$ are average values of MFCCs according to each coefficient of the anchorperson's speech shot $S_j$, $b_1$, $b_2$, ... , and $b_k$ are average values of MFCCs according to each coefficient of the anchorperson's speech shot $S_{j+1}$, and k is a total number of coefficients in the average values of MFCCs according to each coefficient obtained from the anchorperson's speech shot $S_j$ or $S_{j+1}$.

After operation 252, in operation 254, a difference between average decibel values of PSDs in a predetermined frequency bandwidth of the similar candidate shots $S_j'$ and $S_{j+1}'$ is obtained.

After operation 254, in operation 256, when the difference between the average decibel values of PSDs obtained in operation 254 is smaller than a sixth threshold value TH6, the similar candidate shots $S_j'$ and $S_{j+1}'$ are grouped and are decided as similar groups. In this case, when the difference between the average decibel values of PSDs is larger than the sixth threshold value TH6, a flag may be allocated to similar candidate shots in which the average values of MFCCs are similar, because operations 252, 254, and 256 is prevented from being again performed on the similar candidate shots to which the flag is allocated.

After operation 256, in operation 258, it is determined whether all of anchorperson's speech shots are grouped. If it is determined that all of anchorperson's speech shots are not grouped, operation 252 is performed, and operations 252, 254, and 256 are performed on anchorperson's speech shots $S_{j+1}$ and $S_{j+2}$ in which two different average values of MFCCs are the closest. However, if it is determined that all of anchorperson's speech shots are grouped, operation 20A of FIG. 18 is terminated.

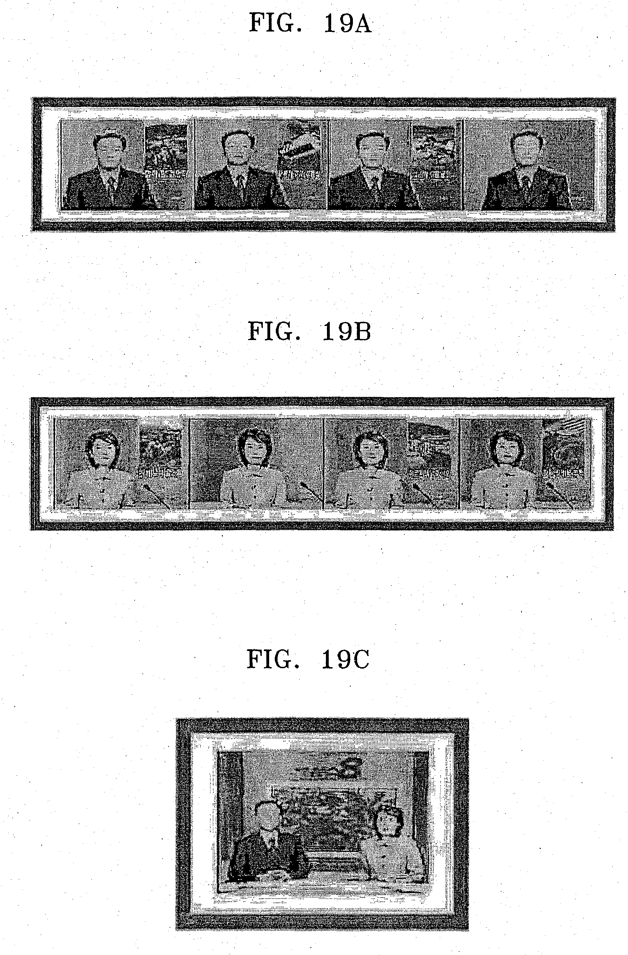

FIGS. 19A, 19B, and 19C show exemplary similar groups decided by grouping the anchorperson speech shots of FIGS. 10A through 10E.

For example, by grouping the anchorperson speech shots of FIGS. 10A through 10E in operation 20 of FIG. 1, anchormen speech shots may be grouped into one similar group, as shown in FIG. 19A, anchorwomen speech shots may be grouped into another similar group, as shown in FIG. 19B, and anchorpersons' speech shots may be grouped into another similar group, as shown in FIG. 19C.

Meanwhile, after operation 20, in operation 22, a representative value of each of the similar groups is obtained as an anchorperson speech model. The representative value is the average value of MFCCs according to each coefficient of shots that belong to the similar groups and the average decibel value of PSDs in the predetermined frequency bandwidth of the shots that belong to the similar groups.

After operation 22, in operation 24, a separate speech model is generated using information about initial frames among frames of each of the shots included in each of the similar groups. The initial frames may be frames corresponding to an initial 4 seconds in each shot included in each of the similar groups. For example, information about the initial frames may be averaged, and the averaged results may be decided as the separate speech model.

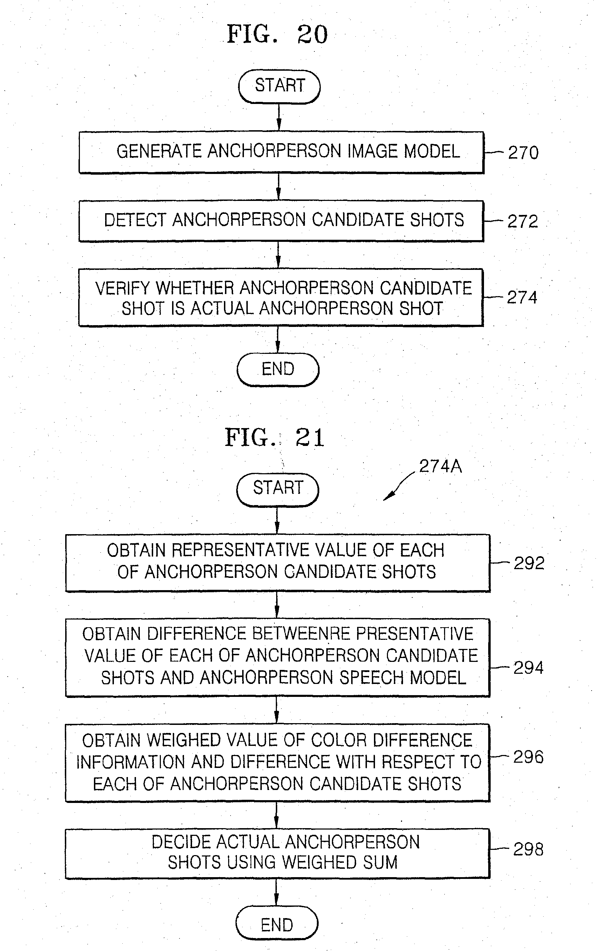

FIG. 20, is a flowchart illustrating a method of detecting anchorperson shots according to another embodiment of the present invention. The method of FIG. 20 includes verifying whether anchorperson candidate shots detected using an anchorperson image model are actual anchorperson shots (operations 270 through 274).

In operation 270, an anchorperson image model is generated.

After operation 270, in operation 272, anchorperson candidate shots are detected using the generated anchorperson image model. For example, a moving image may be divided into a plurality of shots, and the anchorperson candidate shots may be detected by obtaining a color difference between a key frame of each of the plurality of divided shots and the anchorperson image model and by comparing the color differences. In order to obtain the color difference, each of the plurality of shots included in the moving image is divided into R x R (where R is a positive integer equal to or greater than 1) sub-blocks, and the anchorperson image model is divided into R x R sub-blocks. In this case, a color of a sub-block of an object shot is compared with a color of a sub-block of the anchorperson image model placed in the same position as that of the sub-block, and the compared results are decided as the color difference between the sub-blocks. If the color difference between the key frame of a shot and the anchorperson image model is smaller than a color difference threshold value, the shot is decided as an anchorperson candidate shot.

The color difference is a normalized value based on a Grey world theory and may be decided to be robust with respect to some illumination changes. The Grey world theory was introduced by E.H. Land and J.J. McCann ["Lightness and Retinex Theory", Journal of the Optical Society of America, vol. 61, pp. 1-11, 1971].

After operation 272, in operation 274, it is verified whether the anchorperson candidate shot is an actual anchorperson shot that contains an anchorperson image, using the separate speech model and the anchorperson speech model. For example, it is verified using the separate speech model whether an anchorperson candidate shot having a very small length less than 6 seconds is an actual anchorperson shot. Thus, the separate speech model is not used when the anchorperson candidate shot having a large length is the actual anchorperson shot. In this case, the method of FIG. 1 may not include operation 24.

FIG. 21 is a flowchart illustrating operation 274 of FIG. 20 according to an embodiment 274A of the present invention. The embodiment 274A of FIG. 21 includes verifying whether the anchorperson candidate shot is the actual anchorperson shot, using color difference information, time when an anchorperson candidate shot is generated, and a representative value of an anchorperson candidate shot (operations 292 through 298).

In operation 292, a representative value of each of anchorperson candidate shots is obtained using the time when the anchorperson candidate shot is generated. The representative value of the anchorperson candidate shot is the average value of MFCCs according to each coefficient of frames that belong to the shot and the average decibel value of PSDS in the predetermined frequency bandwidth of the frames that belong to the shot. In addition, the time when the anchorperson candidate shot is generated is obtained in operation 272 and is time when the anchorperson candidate shot starts and ends.

After operation 292, in operation 294, a difference DIFF between the representative value of each of the anchorperson speech shots and the anchorperson speech model is obtained. The difference DIFF may be given by Equation 5.

$$DIFF = W_2 \Delta 3 + (1-W_2)\Delta 4 \tag{5}$$

Here, $W_2$ is a second weighed value, $\Delta 3$ is a difference between average values of MFCCs according to each coefficient of the anchorperson candidate shot and the anchorperson speech model, and $\Delta 4$ is a difference between average decibel values of PSDs of the anchorperson candidate shot and the anchorperson speech model.

After operation 294, in operation 296, a weighed sum WS2 of color difference information $\Delta$ COLOR and the difference DIFF that can be expressed by Equation 5, for example, is obtained in each of the anchorperson candidate shots. The color difference information $\Delta$ COLOR is information about the color difference between the anchorperson candidate shot and the anchorperson image model detected in operation 272, and the weighed sum WS2 obtained in operation 296 may be given by Equation 6.

$$WS2 = W_3 \Delta COLOR + (1-W_3)DIFF \tag{6}$$

Here, $W_3$ is a third weighed value. In this case, the weighed sum WS2 reflects the color difference information A COLOR which is video information of the moving image and the difference DIFF which is audio information, and thus is referred to as multi-modal information.

After operation 296, in operation 298, when the weighed value WS2 is not larger than a seventh threshold value TH7, the anchorperson candidate shot is decided as the actual anchorperson shot. However, when the weighed value WS2 is larger than the seventh threshold value TH7, it is decided that the anchorperson candidate shot is not the actual anchorperson shot.

According to an embodiment of the present invention, in operation 270 of FIG. 20, the anchorperson image model may be generated using visual information. The visual information is at least one of anchorperson's face, a background color, the color of anchorperson's clothes, or the occurrence frequency of a similar representative frame. A conventional method of generating an anchorperson image model using visual information was introduced by HongJiang Zhang, Yihong Gong, Smoliar, S.W. , and Shuang Yeo Tan ["Automatic Parsing of News Video", Multimedia Computing and Systems, Proceedings of the International Conference on, pp. 45-54, 1994], Hanjalic, A. , Lagensijk, R.L. , and Biemond, J. ["Template-based Detection of Anchorperson Shots in News Program", Image Processing, ICIP 98. Proceedings, International Conference on, v 3, pp. 148-152, 1998], and M. Tekalp et al ["Video Indexing through Integration of Syntactic and Semantic Features", Proc. Workshop Applications of Computer Vision, 1996], and Nakajima, Y. , Yamguchi, D. , Kato, H. , Yanagihara, H. , and Hatori, Y. ["Automatic Anchorperson Detection from an MPEG coded TV Program", Consumer Electronics, ICCE. 2002 Digest of Technical Papers. International Conference on, pp. 122-123]. In this way, when the anchorperson image model is generated, operations 270 and 272 may be performed while the method of FIG. 1 is performed. In this case, operation 274 is performed after operations 24 and 272 are performed.

According to another embodiment of the present invention, in operation 270, the anchorperson image model may be generated using the anchorperson speech shots or the similar groups obtained in operation 16 or 20 of FIG. 1. In this case, in operation 270, an anchorperson's position in a shot representative frame is grasped using the anchorperson speech shots or the similar groups, and the anchorperson image model is generated using the anchorperson's position.

If the anchorperson image model is generated using the anchorperson speech shots obtained in operation 16 of FIG. 1, operations 270 and 272 may be performed while operations 18 through 24 are performed after operation 16 of FIG. 1. In this case, operation 274 is performed after operation 24.

Alternatively, if the anchorperson image model is generated using the similar groups obtained in operation 20 of FIG. 1, operations 270 and 272 are performed after operation 20 of FIG. 1. In this case, operation 274 is performed after operation 24.

Meanwhile, the method of FIG. 20 may be implemented by performing operations 270 and 272.

In this case, according to an embodiment of the present invention, when the anchorperson image model is generated using the anchorperson speech shots obtained in operation 16 of FIG. 1 in operation 270, operations 270 and 272 are performed after operation 16 of FIG. 1. In this case, the method of FIG. 1 does not need to include operations 18 through 24.

According to another embodiment of the present invention, when the anchorperson image model is generated using the similar groups obtained in operation 20 of FIG. 1 in operation 270, operations 270 and 272 are performed after operation 20 of FIG. 1. In this case, the method of FIG. 1 does not need to include operations 22 and 24.

Hereinafter, an apparatus for detecting an anchorperson shot according to the present invention will be described in detail with reference to the attached drawings

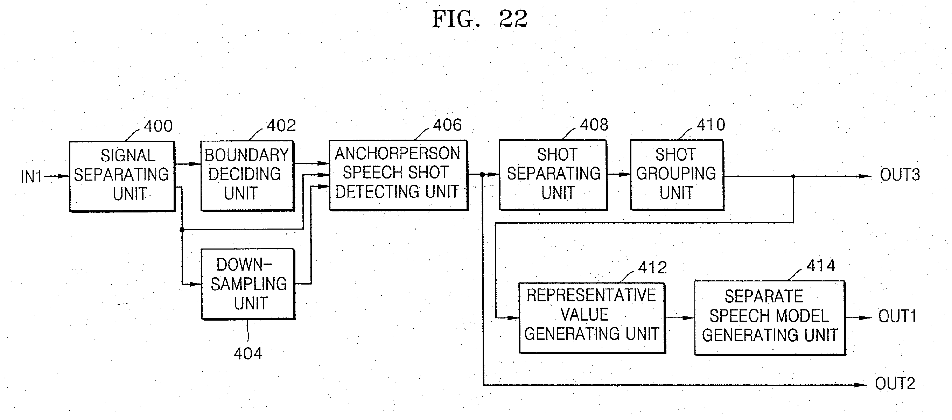

FIG. 22 is a block diagram of an apparatus for detecting an anchorperson shot according to an embodiment of the present invention. The apparatus of FIG. 22 includes a signal separating unit 400, a boundary deciding unit 402, a down-sampling unit 404, an anchorperson speech shot extracting unit 406, a shot separating unit 408, a shot grouping unit 410, a representative value generating unit 412, and a separate speech model generating unit 414.

The apparatus of FIG. 22 may perform the method of FIG. 1.

In order to perform operation 10, the signal separating unit 400 separates a moving image inputted through an input terminal IN1 into audio signals and video signals, outputs the separated audio signals to the down-sampling unit 404, and outputs the separated video signals to the boundary deciding unit 402.

In order to perform operation 12, the boundary deciding unit 402 decides boundaries between shots using the separated video signals inputted by the signal separating unit 400 ad outputs the boundaries between the shots to the anchorperson speech shot extracting unit 406.

In order to perform operation 14, the down-sampling unit 404 down-samples the separated audio signals inputted by the signal separating unit 400 and outputs the down-sampled results to the anchorperson speech shot extracting unit 406.

In order to perform operation 16, the anchorperson speech shot extracting unit 406 extracts shots having a length larger than a first threshold value TH1 and a silent section having a length larger than a second threshold value TH2 from the down-sampled audio signals using the boundaries inputted by the boundary deciding unit 402 as anchorperson speech shots and outputs the extracted anchorperson speech shots to the shot separating unit 408 through an output terminal OUT2.

As described above, when the method of FIG. 1 does not include operation 14, the apparatus of FIG. 22 may not include the down-sampling unit 404. In this case, the anchorperson speech shot extracting unit 406 extracts shots having a length larger than the first threshold value TH1 and a silent section having a length larger than the second threshold value TH2 from the audio signals input from the signal separating unit 400 using the boundaries inputted by the boundary deciding unit 402 and outputs the extracted shots as the anchorperson speech shots.

Meanwhile, in order to perform operation 18, the shot separating unit 408 separates anchorpersons' speech shots from the anchorperson speech shots inputted by the anchorperson speech shot extracting unit 406 and outputs the separated results to the shot grouping unit 410.

In order to perform operation 20, the shot grouping unit 410 groups anchorpersons' speech shots and anchorperson's speech shots from the anchorperson speech shots, decides the grouped results as similar groups, and outputs the decided results to the representative value generating unit 412 through an output terminal OUT3.

In order to perform operation 22, the representative value generating unit 412 obtains a representative value of each of the similar groups inputted by the shot grouping unit 410 and outputs the obtained results to the separate speech model generating unit 414 as an anchorperson speech model.

In order to perform operation 24, the separate speech model generating unit 414 generates a separate speech model using information about initial frames among frames of each of the shots included in each of the similar groups and outputs the generated separate speech model through an output terminal OUT1.

As described above, when the method of FIG. 1 does not include operation 24, the apparatus of FIG. 22 may not include the separate speech model generating unit 414.

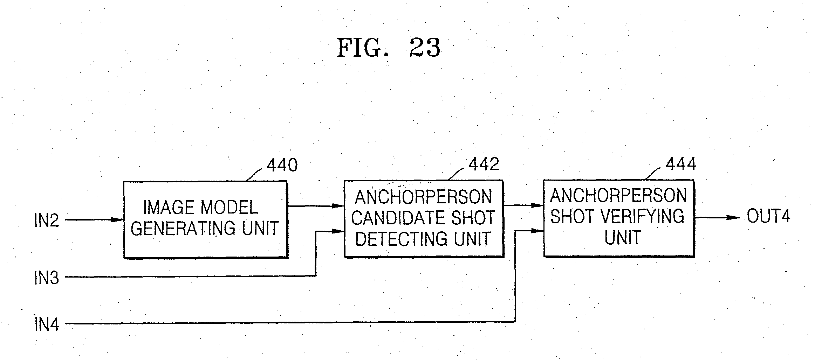

FIG. 23 is a block diagram of an apparatus for detecting an anchorperson shot according to another embodiment of the present invention. The apparatus of FIG. 23 includes an image model generating unit 440, an anchorperson candidate shot detecting unit 442, and an anchorperson shot verifying unit 444.

The apparatus of FIG. 23 may perform the method of FIG. 20.

The image model generating unit 440 generates an anchorperson image model and outputs the generated image model to the anchorperson candidate shot detecting unit 442. In this case, the image model generating unit 440 inputs the anchorperson speech shot outputted from the anchorperson speech shot extracting unit 406 of FIG. 22 through an input terminal IN2 and generates an anchorperson image model using the inputted anchorperson speech shots. Alternatively, the image model generating unit 440 inputs the similar groups outputted from the shot grouping unit 410 of FIG. 22 through an input terminal IN2 and generates the anchorperson speech model using the inputted similar groups.

In order to perform operation 272, the anchorperson candidate shot detecting unit 442 detects the anchorperson candidate shots by comparing the anchorperson image model generated by the image model generating unit 440 with a key frame of each of divided shots inputted through an input terminal IN3 and outputs the detected anchorperson candidate shots to the anchorperson shot verifying unit 444.

In order to perform operation 274, the anchorperson shot verifying unit 444 verifies whether the anchorperson candidate shot inputted by the anchorperson candidate shot detecting unit 442 is an actual anchorperson shot that contains an anchorperson image, using the separate speech model and the anchorperson speech model inputted by the separate speech model generating unit 414 and the representative value generating unit 412 through an input terminal IN4 and outputs the verified results through an output terminal OUT4.

The above-described first weighed value $W_1$ may be set to 0.5, the third weighed value $W_3$ may be set to 0.5, the first threshold value TH1 may be set to 6, the second threshold value TH2 may be set to 0.85, the fourth threshold value TH4 may be set to 4, and the seventh threshold value TH7 may be set to 0.51. In this case, the results of using the method and apparatus for detecting an anchorperson shot according to the present invention and the results of using a conventional method of detecting an anchorperson shot in a news moving image having a quantity of 720 minutes produced by several broadcasting stations are compared with each other, as shown in Table 1. The conventional method was introduced by Xinbo Gao, Jie Li, and Bing Yang ["A Graph-Theoretical Clustering based Anchorperson Shot Detection for News Video Indexing", ICCIMA, 2003].

Table 1

| Classification | Actual anchorperson shot (A) | Extracted shot B | Extracted anchor-person shot C | Wrongly-detected anchorperson shot D | undetected anchorperson shot E | Accuracy = C/B (%) | Recall = C/A (%) |
|---|---|---|---|---|---|---|---|
| Before operation 274 | 284 | 301 | 281 | 20 | 2 | 93.36 | 98.94 |
| After operation 274 | 281 | 282 | 281 | 1 | 0 | 99.65 | 100.00 |
| Conventional method | 255 | 254 | 248 | 6 | 7 | 97.64 | 97.25 |

As shown in Table 1, the method and apparatus for detecting an anchorperson shot according to the present invention have more advantages than those of the conventional method of detecting an anchorperson shot.

By classifying anchorperson shots detected by the method and apparatus according to the present invention according to the stories of news, a user can see shots like a news storyboard from the Internet. As a result, the user can briefly see a corresponding moving image report by selecting articles of interest. That is, the user can record desired contents of the moving image at a desired time automatically and can select and see from the recorded shots a shot in which the user has the most interest, using the method and apparatus for detecting an anchorperson shot according to the present invention.

At present, in an environment in which the conventional TV viewing culture is changed because video contents overflow via broadcasting, the Internet, or other several media and a personal video recorder (PVR), an electronic program guide (EPG) and large-capacity hard drive emerge, the method and apparatus for detecting an anchorperson shot according to the present invention can provide a simplified storyboard or highlights to a moving image which has a regular pattern like in sports or news and can be viewed for a long time even after recording.

As described above, in the method and apparatus for detecting an anchorperson shot according to the present invention, an anchorperson image model can be generated in a moving image such as news having an anchorperson shot without a predetermined anchorperson image model, and even when the color of anchorperson's clothes or face is similar to a background color, the anchorperson shot can be robustly detected, the anchorperson shot can be detected without a first anchorperson shot, and a possibility that a report shot similar to the anchorperson shot may be wrongly detected as the anchorperson shot is removed, that is, the anchorperson shot can be detected accurately such that a news is divided into stories, the types of anchorperson shots are grouped according to voices or genders, the contents of the moving image can be indexed in a home audio/video storage device or an authoring device for providing contents and thus, only an anchorperson shot that contains desired anchorperson's comment is extracted and searched for or summarized.

While the present invention has been particularly shown and described with reference to exemplary embodiments thereof, it will be understood by those skilled in the art that various changes in form and details may be made therein without departing from the scope of the invention as defined by the following claims.

## Claims

1.  A method of detecting an anchorperson shot, the method comprising:

    separating a moving image into audio signals and video signals;
    deciding boundaries between shots using the video signals; and
    extracting shots having a length larger than a first threshold value and a silent section having a length larger than a second threshold value from the audio signals using the boundaries and deciding the extracted shots as anchorperson speech shots.

2.  The method of claim 1, wherein the deciding of the boundaries between the shots comprises deciding portions in which there are relatively large changes in the moving image as the boundaries.

3.  The method of claim 2, wherein in the deciding of the boundaries between the shots, the boundaries are decided by sensing changes of at least one of brightness, color quantity, and motion of the moving image.

4.  The method of any preceding claim, further comprising down-sampling the audio signals, and the shots having the length larger than the first threshold value and the silent section having the length larger than the second threshold value are extracted from the down-sampled audio signals using the boundaries and are decided as the anchorperson speech shots.

5.  The method of any preceding claim, wherein the deciding of the anchorperson speech shots comprises:

    obtaining the length of each of the shots using the boundaries between the shots;
    selecting the shots having a length larger than the first threshold value from the shots;
    obtaining a length of the silent section of each of the selected shots; and
    extracting shots having the silent section having a length larger than the second threshold value from the selected shots.

6.  The method of claim 5, wherein the obtaining of the length of the silent section of each of the selected shots comprises:

obtaining energies of each of the frames included in each of the selected shots;
obtaining a silent threshold value using the energies;
deciding the silent section of each of the selected shots using the silent threshold value; and
counting the number of frames included in the silent section and deciding the counted results as the length of the silent section.

**7.** The method of claim 6, wherein the energy of each of the frames included in each of the selected shots is given by:

$$E_i = \frac{\sqrt{\sum_{n=1}^{f_d t_f} pcm_n^2}}{f_d t_f},$$

where $E_i$ is the energy of an i-th frame among frames included in each shot, $f_d$ is a frequency at which the audio signals are down-sampled, $t_f$ is the length of the i-th frame, and pcm is a pulse code modulation (PCM) value of each sample included in the i-th frame.

**8.** The method of claim 6 or 7, wherein the obtaining of the silent threshold value comprises:

expressing each of the energies as an integer;
obtaining a distribution of frames with respect to energies using the expressed results; and
deciding a reference energy in the distribution of the frames with respect to the energies as the silent threshold value, and wherein the number of the frames distributed with respect to the energies equal to or less than the reference energy is approximate to the number corresponding to a predetermined percentage of a total number of frames included in the selected shots.

**9.** The method of any one of claims 6 to 8, wherein in the counting of the number of the frames, a last frame of each of the selected shots is not counted.

**10.** The method of any one of claims 6 to 9, wherein in the counting of the number of the frames is stopped when the frames having an energy larger than the silent threshold value exist continuously.

**11.** The method of any preceding claim, wherein the deciding of the anchorperson speech shots further comprises selecting only shots of a predetermined percentage having a relatively large length from the extracted shots and deciding the selected shots as the anchorperson speech shots.

**12.** The method of any preceding claim, further comprising:

separating anchorpersons' speech shots that contain anchorpersons' voices, from the anchorperson speech shots;
grouping anchorperson's speech shots excluding the anchorpersons' speech shots from the anchorperson speech shots, grouping the anchorpersons' speech shots, and deciding the grouped results as similar groups; and
obtaining a representative value of each of the similar groups as an anchorperson speech model.

**13.** The method of claim 12, wherein the separating of the anchorpersons' speech shots from the anchorperson speech shots comprises:

removing a silent frame and a consonant frame from each of the anchorperson speech shots; and
obtaining mel-frequency cepstral coefficients (MFCCs) according to each coefficient of each of the frames included in each of the anchorperson speech shots from which the silent frame and the consonant frame are removed, and detecting the anchorpersons' speech shots using the MFCCs.

**14.** The method of claim 13, wherein the removing of the silent frame comprises:

> obtaining energies of each of the frames included in each of the anchorperson speech shots;
> obtaining a silent threshold value using the energies;
> deciding a silent section of each of the anchorperson speech shots using the silent threshold value; and
> removing the silent frame included in the decided silent section, from each of the anchorperson speech shots.

**15.** The method of claim 13 or 14, wherein the removing of the consonant frame comprises:

> obtaining a zero crossing rate in each frame included in each of the anchorperson speech shots;
> deciding the consonant frame using the zero crossing rate in each of the frames included in each of the anchorperson speech shots; and
> removing the decided consonant frame from each of the anchorperson speech shots.

**16.** The method of claim 15, wherein the zero crossing rate (ZCR) is given by:

$$ZCR = \frac{\#}{f_d t_f},$$

> where # is the number of sign changes in decibel values of pulse code modulation data, $f_d$ is a frequency at which the audio signals are down-sampled, and $t_f$ is the length of a frame in which the ZCR is obtained.

**17.** The method of claim 15 or 16, wherein the deciding of the consonant frame comprises:

> obtaining an average value of the zero crossing rates of the frames included in the anchorperson speech shots; and
> deciding a frame having the zero crossing rate larger than a multiple of the average value as the consonant frame in each of the anchorperson speech shots.

**18.** The method of any one of claims 13 to 17, wherein the detecting of the anchorpersons' speech shots comprises:

> obtaining average values of the MFCCs according to each coefficient of the frame of each window while moving a window having a predetermined length at predetermined time intervals with respect to each of the anchorperson speech shots from which the silent frame and the consonant frame are removed;
> obtaining a difference between the average values of the MFCCs between adjacent windows; and
> deciding the anchorperson speech shots as anchorpersons' speech shots having the difference larger than a third threshold value with respect to each of the anchorperson speech shots from which the silent frame and the consonant frame are removed.

**19.** The method of any one of claims 13 to 18, wherein in the detecting of the anchorpersons' speech shots, the MFCCs according to each coefficient and power spectral densities (PSDs) in a predetermined frequency bandwidth are obtained in each of the frames included in each of the anchorperson speech shots from which the silent frame and the consonant frame are removed, and the anchorpersons' speech shots are detected using the MFCCs according to each coefficient and the PSDs.

**20.** The method of claim 19, wherein the detecting of the anchorpersons' speech shots comprises:

> obtaining average values of the MFCCs according to each coefficient and average decibel values of the PSDs in the predetermined frequency bandwidth of the frame of each window while moving a window having a predetermined length at time intervals with respect to each of the anchorperson speech shots from which the silent frame and the consonant frame are removed;
> obtaining a difference $\Delta 1$ between the average values of the MFCCs and a difference $\Delta 2$ between the average decibel values of the PSDs between the adjacent windows;
> obtaining a weighed sum of the differences $\Delta 1$ and $\Delta 2$ in each of the anchorperson speech shots from which the silent frame and the consonant frame are removed; and
> deciding the anchorperson speech shots having the weighed sum larger than a fourth threshold value as the anchorpersons' speech shots.

21. The method of claim 19 or 20, wherein the predetermined frequency bandwidth is 100-150 Hz.

22. The method of any one of claims 12 to 21, wherein the grouping of the anchorperson's speech shots and deciding the similar groups comprises:

obtaining average values of the MFCCs in each of the anchorperson's speech shots;
when a MFCC distance calculated using the average values of the MFCCs according to each coefficient of two anchorpersons' speech shots is the closest among the anchorperson speech shots and smaller than a fifth threshold value, deciding the two anchorpersons' speech shots as similar candidate shots;
obtaining a difference between average decibel values of PSDs in a predetermined frequency bandwidth of the similar candidate shots;
when the difference between the average decibel values is smaller than a sixth threshold value, grouping the similar candidate shots and deciding the grouped similar candidate shots as the similar groups; and
determining whether all of the anchorperson's speech shots are grouped, and wherein if it is determined that all of the anchorperson's speech shots are not grouped, deciding the similar candidate shots with respect to other two anchorperson's speech shots, obtaining the difference, and deciding the similar groups are performed.

23. The method of claim 22, wherein the grouping the anchorperson's speech shots and deciding the similar groups further comprises when the difference between the average decibel values of the PSDs is not smaller than the sixth threshold value, allocating a flag to the similar candidate shots, and after allocating the flag to the similar candidate shots, deciding the similar candidate shots with respect to the similar candidate shots to which the flag is allocated, obtaining the difference, and deciding the similar groups are not performed again.

24. The method of any one of claims 12 to 23, wherein the representative value is the average value of MFCCs according to each coefficient of shots that belong to the similar groups and the average decibel value of PSDs in the predetermined frequency bandwidth of the shots that belong to the similar groups.

25. The method of any one of claims 12 to 24, further comprising generating a separate speech model using information about initial frames among frames included in each of the similar groups.

26. The method of any one of claims 12 to 25, further comprising generating an anchorperson image model.

27. The method of claim 26, further comprising comparing the generated anchorperson image model with a key frame of each of the divided shots and detecting the anchorperson candidate shots.

28. The method of claim 27, further comprising verifying whether the anchorperson candidate shot is an actual anchorperson shot which contains an anchorperson image, using the separate speech model and the anchorperson speech model.

29. The method of claim 26, wherein the anchorperson image model is generated using the anchorperson speech shots.

30. The method of claim 26, wherein the anchorperson image model is generated using visual information.

31. The method of claim 26, wherein the anchorperson image model is generated using the similar groups.

32. The method of claim 28, wherein the verifying whether the anchorperson candidate shot is the actual anchorperson shot comprises:

obtaining a representative value of each of the anchorperson candidate shots using time when the anchorperson candidate shots are generated, obtained in detecting the anchorperson candidate shots;
obtaining a difference between the representative value of each of the anchorperson candidate shots and the anchorperson speech model;
obtaining a weighed sum of the difference and color difference information between the anchorperson candidate shots obtained in detecting the anchorperson candidate shots and the anchorperson image model with respect to each of the anchorperson candidate shots; and
when the weighed sum is smaller than a seventh threshold value, deciding the anchorperson candidate shot as the actual anchorperson shot.

33. An apparatus for detecting an anchorperson shot, the apparatus comprising:

a signal separating unit separating a moving image into audio signals and video signals;
a boundary deciding unit deciding boundaries between shots using the video signals; and
an anchorperson speech shot extracting unit extracting shots having a length larger than a first threshold value and a silent section having a length larger than a second threshold value from the audio signals using the boundaries and outputting the extracted shots as anchorperson speech shots.

34. The apparatus of claim 33, further comprising a down-sampling unit down-sampling the separated audio signals, and the anchorperson speech shot extracting unit extracts as the anchorperson speech shots the shots having the length larger than the first threshold value and the silent section having the length larger than the second threshold value are extracted from the down-sampled audio signals using the boundaries

35. The apparatus of claim 33 or 34, further comprising:

a shot separating unit separating shots that contain anchorpersons' voices, from the anchorperson speech shots;
a shot grouping unit grouping anchorperson's speech shots excluding anchorpersons' speech shots that contain the anchorpersons' voices from the anchorperson speech shots, grouping the anchorpersons' speech shots, and deciding the grouped results as similar groups; and
a representative value generating unit calculating a representative value of each of the similar groups and outputting the calculated results as an anchorperson speech model.

36. The apparatus of claim 35, further comprising a separate speech model generating unit generating a separate speech model using information about initial frames among frames of each of the shots included in each of the similar groups.

37. The apparatus of claim 36, further comprising an image model generating unit generating an anchorperson image model.

38. The apparatus of claim 37, further comprising comparing an anchorperson candidate shot detecting unit comparing the generated anchorperson image model with a key frame of each of the divided shots and detecting the anchorperson candidate shots.

39. The apparatus of any one of claims 36 to 38, further comprising an image model generating unit generating an anchorperson speech model.

40. The apparatus of claim 39, further comprising an anchorperson candidate shot detecting unit comparing the generated anchorperson image model with a key frame of each of the divided shots and detecting the anchorperson candidate shots.

41. The apparatus of claim 40, further comprising an anchorperson shot verifying unit verifying whether the anchorperson candidate shot is an actual anchorperson shot which contains an anchorperson image, using the separate speech model and the anchorperson speech model.

# FIG. 1

```
                    ┌─────────┐
                    │  START  │
                    └─────────┘
                         │
                         ▼
        ┌─────────────────────────────────────┐
        │   SEPARTE MOVING IMAGE INTO AUDIO    │──── 10
        │      SIGNALS AND VIDEO SIGNALS       │
        └─────────────────────────────────────┘
                         │
                         ▼
        ┌─────────────────────────────────────┐
        │     DECIDE BOUNDARIES BETWEEN        │──── 12
        │       SHOTS USING VIDEO SIGNALS      │
        └─────────────────────────────────────┘
                         │
                         ▼
        ┌─────────────────────────────────────┐
        │       DOWN-SAMPLE AUDIO SIGNALS      │──── 14
        └─────────────────────────────────────┘
                         │
                         ▼
        ┌─────────────────────────────────────┐
        │    DECIDE ANCHORPERSON SPEECH SHOTS  │──── 16
        └─────────────────────────────────────┘
                         │
                         ▼
        ┌─────────────────────────────────────┐
        │  SEPARATE ANCHORPERSON'S SPEECH SHOTS│──── 18
        │  FROM ANCHORPERSON SPECCH SHOTS      │
        └─────────────────────────────────────┘
                         │
                         ▼
        ┌─────────────────────────────────────┐
        │         DECIDE SIMILAR GROUPS        │──── 20
        └─────────────────────────────────────┘
                         │
                         ▼
        ┌─────────────────────────────────────┐
        │    OBTAIN REPRESENTATIVE VALUE OF    │──── 22
        │       EACH OF SIMILAR GROUPS         │
        └─────────────────────────────────────┘
                         │
                         ▼
        ┌─────────────────────────────────────┐
        │    GENERATE SEPARATE SPEECH MODEL    │──── 24
        └─────────────────────────────────────┘
                         │
                         ▼
                    ┌─────────┐
                    │   END   │
                    └─────────┘
```

FIG. 2A

FIG. 2B

# FIG. 3

16A

```
        ( START )

┌─────────────────────────────────────┐
│   OBTAIN LENGTH OF EACH OF SHOTS     │──── 30
└─────────────────────────────────────┘

┌─────────────────────────────────────┐
│      SELECT SHOTS HAIVNG LENGTH      │──── 32
│          LARGER THAN TH1             │
└─────────────────────────────────────┘

┌─────────────────────────────────────┐
│   OBTAIN LENGTH OF SILENT SECTION OF │──── 34
│        EACH OF SELECTED SHOTS        │
└─────────────────────────────────────┘

┌─────────────────────────────────────┐
│   EXTRACT SHOTS HAVING SILENT SECTION│──── 36
│     HAVING LENGTH LARGER THAN TH2    │
└─────────────────────────────────────┘

┌─────────────────────────────────────┐
│   SELECT ONLY SHOTS HAVING RELATIVELY│──── 38
│   LARGE LENGTH FROM EXTRACTED SHOTS  │
└─────────────────────────────────────┘

           ( TO 18 )
```

# FIG. 4

START

OBTAIN ENERGY OF EACH OF FRAMES
INCLUDED IN EACH OF SELECTED SHOTS — 50

OBTAIN SILENT THRESHOLD VALUE — 52

DECIDE SILENT SECTION OF
EACH OF SELECTED SHOTS — 54

COUNT THE NUMBER OF FRAMES
INCLDUED IN SILENT SECTION — 56

TO 36

# FIG. 5

FRAME 1   FRAME 2   FRAME 3         FRAME i         FRAME N

. . .                    . . .

70

# FIG. 6

```
                                      52A
        ┌─────────────┐
        │    START    │
        └─────────────┘
               │
               ▼
  ┌──────────────────────────────┐
  │  EXPRESS ENERGIES AS INTEGERS │── 80
  └──────────────────────────────┘
               │
               ▼
  ┌──────────────────────────────┐
  │  OBTAIN DISTRIBUTION OF FRAMES │
  │  WITH RESPECT TO ENERGIES     │── 82
  └──────────────────────────────┘
               │
               ▼
  ┌──────────────────────────────┐
  │  DECIDE REFERENCE ENERGY AS   │
  │  SILENT THRESHOLD VALUE       │── 84
  └──────────────────────────────┘
               │
               ▼
        ┌─────────────┐
        │   TO 54     │
        └─────────────┘
```

# FIG. 7

THE NUMBER OF FRAMES

250
200
150
100
50

0  10  20  30  40  50  60  70  80  90  100 110 120 130 140 150 160 170 180 190 200

ENERGIES

90

FIG. 8

FIG. 9

FIG. 10A

FIG. 10B

FIG. 10C

FIG. 10D

FIG. 10E

# FIG. 11

18A

( START )

| REMOVE SILENT FRAME AND CONSONANT FRAME FROM EACH OF ANCHORPERSON SPEECH SHOTS | 130 |

| DETECT ANCHORPERSONS SPEECH SHOTS | 132 |

( TO 20 )

# FIG. 12

130A

( START )

| OBTAIN ENERGY OF EACH OF FRAMES INCLUDED IN EACH OF ANCHORPERSON SPEECH SHOTS | 150 |

| OBTAIN SILENT THRESHOLD VALUE | 152 |

| DECIDE SILENT SECTION OF EACH OF ANCHORPERSON SPEECH SHOTS | 154 |

| REMOVESILENT FRAME INCLUDED IN SILENT SECTION | 156 |

( TO 132 )

# FIG. 13

```
        ( START )                    ⟍ 130B

  ┌─────────────────────────────────────┐
  │ OBTAIN ZCR ACCORDING TO EACH FRAME   │── 170
  │ IN EACH OF ANCHORPERSON SPEECH SHOTS │
  └─────────────────────────────────────┘

  ┌─────────────────────────────────────┐
  │      DECIDE CONSONANT FRAME          │── 172
  └─────────────────────────────────────┘

  ┌─────────────────────────────────────┐
  │    REMOVE DECIDED CONSONANT FRAME    │── 174
  └─────────────────────────────────────┘

          ( TO 132 )
```

# FIG. 14

```
        ( START )                    ⟍ 172A

  ┌─────────────────────────────────────┐
  │      OBTAIN AVERAGE VALUE OF ZCRS    │── 190
  └─────────────────────────────────────┘

  ┌─────────────────────────────────────┐
  │  DECIDE FRAME HAVING ZCR LARGER THAN │── 192
  │  AVERAGE VALUE AS CONSONANT FRAME    │
  └─────────────────────────────────────┘

          ( TO 174 )
```

# FIG. 15

START

132A

OBTAIN AVERAGE VALUES OF MFCCS ACCORDING TO EACH COEFFICIENT OF FRAME INCLUDED IN EACH WINDOW WITH RESPECT TO EACH ANCHORPERSON SPEECH SHOT — 210

OBTAIN DIFFERENCE BETWEEN AVERAGE VALUES OF MFCCS BETWEEN ADJACENT WINDOWS — 212

DECIDE ANCHORPERSON SPEECH SHOTS HAVING DIFFERENCE LARGER THAN TH3 AS ANCHORPERSON'S SPEECH SHOT — 214

TO 20

FIG. 16A

FIG. 16B

FIG. 16C

FIG. 16D

FIG. 16E

# FIG. 17

START

132B

OBTAIN AVERAGE VALUE OF MFCCS ACCORDING TO EACH COEFFICIENT OF EACH OF FRAMES INCLUDED IN EACH WINDOW AND AVERAGE DECIBEL VALUE OF PSDS WITH RESPECT TO EACH ANCHORPERSON SPEECH SHOT — 230

OBTAIN DIFFERENCE $\Delta 1$ BETWEEN AVERAGE VALUES OF MFCCS AND DIFFERENCE $\Delta 2$ BETWEEN AVERAGE DECIBEL VALUES OF PSDS BETWEEN ADJACENT WINDOWS — 232

OBTAIN WEIGHED SUM OF DIFFERENCES IN EACH ANCHORPERSON SPEECH SHOT — 234

DECIDE ANCHORPERSON SPEECH SHOTS HAVING WEIGHED SUM LARGER THAN TH4 AS ANCHORPERSON'S SPEECH SHOT — 236

TO 20

# FIG. 18

20A

START

OBTAIN AVERAGE VALUES OF MFCCS
ACCORDING EACH COEFFICIENT IN EACH
OF ANCHORPERSON'S SPEECH SHOTS — 250

DECIDE SIMILAR CANDIDATE SHOTS
USING AVERAG VALUES OF MFCCS
ACCORDING TO EACH COEFFICIENT — 252

OBTAIN DIFFERENCE BETWEEN AVERAGE DECIBEL
VALUES OF PSDS OF SIMILAR CANDIDATE SHOTS — 254

DECIDE SIMILAR GROUPS USING DIFFERENCE — 256

NO

ARE ALL OF
ANCHORPERSON'S SPEECH
SHOTS GROUPED? — 258

YES

TO 22

## FIG. 19A

## FIG. 19B

## FIG. 19C

# FIG. 20

START

GENERATE ANCHORPERSON IMAGE MODEL — 270

DETECT ANCHORPERSON CANDIDATE SHOTS — 272

VERIFY WHETHER ANCHORPERSON CANDIDATE SHOT IS ACTUAL ANCHORPERSON SHOT — 274

END

# FIG. 21

274A

START

OBTAIN REPRESENTATIVE VALUE OF EACH OF ANCHORPERSON CANDIDATE SHOTS — 292

OBTAIN DIFFERENCE BETWEENRE PRESENTATIVE VALUE OF EACH OF ANCHORPERSON CANDIDATE SHOTS AND ANCHORPERSON SPEECH MODEL — 294

OBTAIN WEIGHED VALUE OF COLOR DIFFERENCE INFORMATION AND DIFFERENCE WITH RESPECT TO EACH OF ANCHORPERSON CANDIDATE SHOTS — 296

DECIDE ACTUAL ANCHORPERSON SHOTS USING WEIGHED SUM — 298

END

## FIG. 22

```
         400              402                406               408            410
IN1 →  SIGNAL       BOUNDARY        ANCHORPERSON        SHOT          SHOT              OUT3
       SEPARATING   DECIDING        SPEECH SHOT         SEPARATING    GROUPING
       UNIT         UNIT            DETECTING UNIT      UNIT          UNIT

                    DOWN-                                              412              414
                    SAMPLING                                      REPRESENTATIVE    SEPARATE
                    UNIT                                          VALUE             SPEECH MODEL    OUT1
                                                                 GENERATING UNIT   GENERATING UNIT
                     404
                                                                                                   OUT2
```

FIG. 23

IN2 → | IMAGE MODEL GENERATING UNIT | 440

IN3 → | ANCHORPERSON CANDIDATE SHOT DETECTING UNIT | 442

IN4 → | ANCHORPERSON SHOT VERIFYING UNIT | 444 → OUT4

EP 1 566 748 A1

**European Patent Office**

## EUROPEAN SEARCH REPORT

| Category | Citation of document with indication, where appropriate, of relevant passages | Relevant to claim | CLASSIFICATION OF THE APPLICATION (Int.Cl.7) |
|---|---|---|---|
| X,P | SANG-KYUN KIM ET AL: "An effective anchorperson shot extraction method robust to false alarms" ADVANCES IN MULTIMEDIA INFORMATION PROCESSING - PCM 2004. 5TH PACIFIC RIM CONFERENCE ON MULTIMEDIA. PROCEEDINGS, PART I (LECTURE NOTES IN COMPUTER SCIENCE VOL.3331) SPRINGER-VERLAG BERLIN, GERMANY, 2004, pages 255-262, XP002327896 ISBN: 3-540-23974-X * the whole document * ----- | 1-41 | G06F17/30 G10L17/00 G11B27/10 |
| A | US 2003/182118 A1 (OBRADOR PERE ET AL) 25 September 2003 (2003-09-25) * paragraphs [0009], [0029], [0033] - [0047], [0053], [0054], [0062] * * figures 2-7 * ----- | 1-41 | |
| A | PATEL N V ET AL SOCIETY OF PHOTO-OPTICAL INSTRUMENTATION ENGINEERS (SPIE): "VIDEO CLASSIFICATION USING SPEAKER IDENTIFICATION" STORAGE AND RETRIEVAL FOR IMAGE AND VIDEO DATABASES 5. SAN JOSE, FEB. 13 - 14, 1997, PROCEEDINGS OF SPIE, BELLINGHAM, SPIE, US, vol. VOL. 3022, 13 February 1997 (1997-02-13), pages 218-225, XP000742385 ISBN: 0-8194-2433-1 * page 220, paragraph 2 * * page 222, paragraph 2 * * figures 1-3 * -----  -/-- | 1-41 | TECHNICAL FIELDS SEARCHED (Int.Cl.7) G06F G10L G11B |

The present search report has been drawn up for all claims

| Place of search | Date of completion of the search | Examiner |
|---|---|---|
| The Hague | 11 May 2005 | Maetz, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        ........................................................................
& : member of the same patent family, corresponding document

EPO FORM 1503 03.82 (P04C01)

**European Patent Office**

# EUROPEAN SEARCH REPORT

Application Number

EP 04 25 8016

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | YINGYING ZHU ET AL: "Scene change detection based on multimodal integration" PROCEEDINGS OF THE SPIE, SPIE, BELLINGHAM, VA, US, vol. 5286, September 2003 (2003-09), pages 968-973, XP002292970 ISSN: 0277-786X * page 969 - page 970 * * figures 2,3 * | 1-41 | |
| A | YING LI ET AL: "Identification of speakers in movie dialogs using audiovisual cues" 2002 IEEE INTERNATIONAL CONFERENCE ON ACOUSTICS, SPEECH, AND SIGNAL PROCESSING. PROCEEDINGS (CAT. NO.02CH37334) IEEE PISCATAWAY, NJ, USA, vol. 2, 2002, pages II-2093, XP002327897 ISBN: 0-7803-7402-9 * page 2093, column 2 - page 2094, column 1 * * figure 1 * | 1-41 | |
| A | TSEKERIDOU S ET AL: "Speaker dependent video indexing based on audio-visual interaction" IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US, vol. 1, 4 October 1998 (1998-10-04), pages 358-362, XP010308791 ISBN: 0-8186-8821-1 * page 358, column 2 * * page 259, column 2, paragraph 3 * * figures 1,2 * | 1-41 | TECHNICAL FIELDS SEARCHED (Int.Cl.7) |

-/--

The present search report has been drawn up for all claims

| Place of search | Date of completion of the search | Examiner |
|---|---|---|
| The Hague | 11 May 2005 | Maetz, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 04 25 8016

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | SARACENO C ET AL: "Audio as a support to scene change detection and characterization of video sequences" 1997 IEEE INTERNATIONAL CONFERENCE ON ACOUSTICS, SPEECH, AND SIGNAL PROCESSING (CAT. NO.97CB36052) IEEE COMPUT. SOC. PRESS LOS ALAMITOS, CA, USA, vol. 4, 1997, pages 2597-2600 vol., XP002327898 ISBN: 0-8186-7919-0 * page 2597, column 2, paragraph 3 - page 2598, column 1, paragraph 1 * * page 2598, column 2, paragraph 3 * ----- | 1-41 | |

TECHNICAL FIELDS SEARCHED (Int.Cl.7)

The present search report has been drawn up for all claims

| Place of search | Date of completion of the search | Examiner |
|---|---|---|
| The Hague | 11 May 2005 | Maetz, A |

EPO FORM 1503 03.82 (P04C01)

**ANNEX TO THE EUROPEAN SEARCH REPORT
ON EUROPEAN PATENT APPLICATION NO.**

EP 04 25 8016

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2005

| Patent document cited in search report | Publication date | Patent family member(s) | Publication date |
|---|---|---|---|
| US 2003182118 A1 | 25-09-2003 | AU 2003241278 A1<br>EP 1488352 A2<br>WO 03083726 A2 | 13-10-2003<br>22-12-2004<br>09-10-2003 |

EPO FORM P0459

For more details about this annex : see Official Journal of the European Patent Office, No. 12/82